# EUROPÄISCHE PATENTANMELDUNG

(11) **EP 4 737 138 A1**
(43) Veröffentlichungstag der Anmeldung: **06.05.2026**
(21) Anmeldenummer: 25206821.8
(22) Anmeldetag: 06.10.2025
(51) Int. Cl.: B60C 11/12, B60C 1/00, B60C 11/03

(54) **LAUFSTREIFEN UND FAHRZEUGREIFEN MIT LAUFSTREIFEN**

(30) Priorität: 05.11.2024 DE 102024210606
(71) Anmelder: Continental Reifen Deutschland GmbH, 30175 Hannover (DE)
(72) Erfinder: Porubsky, Daniel, 020 01 Púchov (SK); Magusin, Marek, 020 01 Púchov (SK); Meier, Nico, 30175 Hannover (DE); Dr. Neuber, Cord-Christian, 30175 Hannover (DE)
(74) Vertreter: Continental Corporation

(57) **Zusammenfassung**

Laufstreifen für einen Fahrzeugreifen, umfassend mindestens einen Profilblock (2), der eine achsensymmetrische Lamelle (6) aufweist, wobei eine der Achsensymmetrie zugrunde liegende Spiegelachse (9) parallel zu einer Längsrichtung (8) des Laufstreifens ausgerichtet ist,
wobei eine sich durch die Spiegelachse (9) ergebene Lamellenseite der Lamelle einen ersten Lamellenabschnitt (3), einen zweiten Lamellenabschnitt (4) und einen dritten Lamellenabschnitt (5) umfasst,
wobei der erste Lamellenabschnitt (3) und der dritte Lamellenabschnitt (5) einen parallelen Versatz (10) aufweisen und den zweiten Lamellenabschnitt (4) einschließen,
wobei der erste Lamellenabschnitt (3) und die Spiegelachse (9) einen ersten Winkel (11) kleiner 90° einschließen,
wobei der erste Winkel (11) in Richtung des parallelen Versatzes (10) eingeschlossen ist.

## Beschreibung

Die Erfindung betrifft einen Laufstreifen für einen Fahrzeugreifen, der mindestens ein Profilblock mit einer achsensymmetrischen Lamelle umfasst, wobei eine der Achsensymmetrie zugrunde liegende Spiegelachse parallel zu einer Längsrichtung des Laufstreifens ausgerichtet ist. Eine sich durch die Spiegelachse ergebene Lamellenseite der Lamelle umfasst einen ersten Lamellenabschnitt, einen zweiten Lamellenabschnitt und einen dritten Lamellenabschnitt. Der erste Lamellenabschnitt und der dritte Lamellenabschnitt weisen einen parallelen Versatz auf und schließen den zweiten Lamellenabschnitt ein. Der erste Lamellenabschnitt und die Spiegelachse schließen einen ersten Winkel kleiner 90° ein.

Die EP 0 402 021 A2 offenbart einen geräuscharmen Reifen mit einer Lauffläche, die mit axialen Rillen versehen ist, die in regelmäßigen Abständen in der Umfangsrichtung des Reifens angeordnet sind.

Die EP 0 658 451 A1 offenbart einen Reifen mit einem Laufstreifen, welcher mindestens zwei in Umfangsrichtung umlaufende Laufstreifenbereiche aufweist, die bezüglich ihrer Pitchanzahl und ihrer Pitchfolge übereinstimmen.

Die EP 1 431 077 A1 offenbart einen Fahrzeugluftreifen, insbesondere Radialreifen, mit einem Laufstreifen, welcher sich aus Profilpositiven zusammensetzt, die durch im oder über den Zentralbereich diagonal verlaufende Rillen sowie durch Querrillen strukturiert sind, wobei die diagonal verlaufenden Rillen gemeinsam mit den Profilpositiven Basispitches mit mindestens zwei verschiedenen Umfangslängen bilden, die über den Reifenumfang gemäß einer Pitchfolge geräuschoptimiert angeordnet sind.

Die EP 2 803 501 A1 offenbart einen Fahrzeugluftreifen mit einem profilierten Laufstreifen mit Profilstrukturen, die Profilpositive, wie in Profilblockreihen angeordnete Profilblöcke, und Profilnegative, wie Umfangsrillen und Querrillen, umfassen, wobei die Profilpositive über den Reifenumfang gemäß zumindest einer bestimmten Pitchfolge und nach einem Verfahren der Pitchlängenvariation geräuschoptimiert angeordnet sind.

Die EP 2 965 925 A1 offenbart einen Fahrzeugluftreifen mit einem Laufstreifen, dessen Profilstrukturen gemäß einem Verfahren der Pitchlängenvariation in einer Pitchfolge mit Pitches mit zumindest zwei unterschiedlichen Umfangslängen geräuschoptimiert angeordnet sind.

Die EP 3 335 907 A1 offenbart einen Fahrzeugluftreifen mit einem Laufstreifen, welcher zumindest eine aus Profilblöcken und zwischen diesen verlaufende Querrillen bestehende Profilblockreihe aufweist, welche nach einem Verfahren der Pitchlängenvariation in zumindest zwei unterschiedliche Pitchlängen aufweisende Pitches gegliedert ist, deren Aufeinanderfolge über den Reifenumfang gemäß einer geräuschoptimierten Pitchfolge erfolgt.

Dem Stand der Technik ist gemeinsam, dass die offenbarten geräuschverbesserten Reifen eine versetzte Anordnung von Profilblöcken einer in Umlaufrichtung verlaufenden Profilblockreihe gegenüber Profilblöcken einer weiteren in Umlaufrichtung verlaufenden Profilblockreihe aufweisen. Strukturen innerhalb eines Profilblocks werden nicht beachtet.

Vor diesem Hintergrund liegt der Erfindung die erste technische Aufgabe zugrunde, einen Laufstreifen zur Verfügung zu stellen, der ein geringeres Laufgeräusch aufweist. Ferner liegt der Erfindung die zweite Aufgabe zugrunde, einen Fahrzeugreifen mit einem geringeren Laufgeräusch zur Verfügung zu stellen.

Die erstgenannte Aufgabe wird gelöst durch einen Laufstreifen mit den Merkmalen gemäß Anspruch 1. Die zweitgenannte Aufgabe wird gelöst durch einen Fahrzeugreifen mit den Merkmalen gemäß nebengeordnetem Anspruch 10. Die Unteransprüche betreffen vorteilhafte Ausführungsformen der Erfindung.

Erfindungsgemäß ist ein Laufstreifen mit den Merkmalen nach Anspruch 1 offenbart.

Der erfindungsgemäße Laufstreifen ist zur Verwendung mit einem Fahrzeugreifen ausgebildet. In einem bestimmungsgemäßen Gebrauch des Laufstreifens mit einem Fahrzeugreifen, d.h. als Teil des Fahrzeugreifens, weist der Laufstreifen genähert die Form eines Mantels eines Kreiszylinders auf. Als separater Laufstreifen ist somit eine Länge in einer Längsrichtung des Laufstreifens gleich einer Länge entlang einer Umfangsrichtung des Fahrzeugreifens.

Der Laufstreifen weist im bestimmungsgemäßen Gebrauch mit einem Fahrzeugreifen zudem eine radial außenliegende Lauffläche auf, die mit einer Straßenoberfläche in Kontakt tritt. Die Lauffläche weist ein Reifenprofil auf, welches mindestens einen Profilblock umfasst. Der Profilblock ist zu anderen möglichen Profilblöcken durch Rillen getrennt, so dass eine Rillenwand einer der Rillen mit einer Profilblockkante des Profilblocks gleich ist.

Der Profilblock umfasst eine Lamelle. In einem bestimmungsgemäßen Gebrauch des Laufstreifens mit einem Fahrzeugreifen weist die Lamelle eine radial außenliegende Öffnung auf, die sich beim Fahren je nach Fahrsituation schließen und wieder öffnen kann, wodurch sich die Griffigkeit des Fahrzeugreifens erhöht. Die Lamelle ist achsensymmetrisch ausgebildet. D.h. die Lamelle weist zwei sich durch eine Spiegelachse ergebene Lamellenseiten auf, die zueinander spiegelsymmetrisch hinsichtlich der Spiegelachse sind. Die der Achsensymmetrie zugrunde liegende Spiegelachse ist zu der Längsrichtung des Laufstreifens parallel ausgerichtet.

Eine der zwei Lamellenseiten, d.h., eine sich durch die Spiegelachse ergebene Lamellenseite der Lamelle umfasst einen ersten Lamellenabschnitt, einen zweiten Lamellenabschnitt und einen dritten Lamellenabschnitt. Ein Lamellenabschnitt ist ein Abschnitt der Lamelle entlang der Lauffläche. Eine Lamelle weist eine Anzahl an Abschnitten auf, die in einer Reihe miteinander verbunden sind.

Der erste Lamellenabschnitt und der dritte Lamellenabschnitt weisen einen parallelen Versatz auf. D.h., der erste Lamellenabschnitt und der dritte Lamellenabschnitt verlaufen parallel zueinander und sind nicht miteinander verbunden. Der erste Lamellenabschnitt und der dritte Lamellenabschnitt schließen zudem den zweiten Lamellenabschnitt ein. Der zweite Lamellenabschnitt ist daher auf der einen Seite mit dem ersten Lamellenabschnitt und auf der anderen Seite mit dem dritten Lamellenabschnitt verbunden.

Darüber hinaus schließen der erste Lamellenabschnitt und die Spiegelachse einen ersten Winkel kleiner 90° ein. D.h., der erste Lamellenabschnitt ist zu der Spiegelachse nicht senkrecht angeordnet. Aufgrund der Spiegelsymmetrie der zwei Lamellenseiten bildet der erste Lamellenabschnitt eine V-Form. Daraus ergibt sich ebenfalls, dass die Lamelle entlang ihrer Erstreckung eine V-Form bildet. Des Weiteren folgt daraus, dass der dritte Lamellenabschnitt der einen Lamellenseite und der dritte Lamellenabschnitt der anderen Lamellenseite zueinander gekippt sind, d.h. nicht parallel verlaufen, und ebenfalls den ersten Winkel zueinander einschließen. Im bestimmungsgemäßen Gebrauch des Laufstreifens mit dem Fahrzeugreifen weist die Spitze der V-Form in Umlaufrichtung des Fahrzeugreifens.

Erfindungsgemäß ist der erste Winkel in Richtung des parallelen Versatzes eingeschlossen. D.h., im bestimmungsgemäßen Gebrauch des Laufstreifens mit dem Fahrzeugreifen ist der Versatz in Umlaufrichtung des Fahrzeugreifens ausgebildet.

Der Vorteil der Erfindung liegt in der minimalen Anzahl an Kanten senkrecht zu der Längsrichtung des Laufstreifens bzw. im bestimmungsgemäßen Gebrauch des Laufstreifens mit dem Fahrzeugreifen senkrecht zu der Umlaufrichtung des Fahrzeugreifens. D.h., im bestimmungsgemäßen Gebrauch des Laufstreifens mit dem Fahrzeugreifen weist der Fahrzeugreifen die minimale Anzahl an Kanten entlang einer axialen Richtung auf, wobei die axiale Richtung durch die Drehachse des Fahrzeugreifens definiert ist.

Eine Kante entsteht im Allgemeinen an einem Übergang von der Lauffläche zu einer Seitenwand der Lamelle als auch an einem Übergang von einer Seitenwand der Lamelle zu der Lauffläche. In dem erfindungsgemäßen Laufstreifen ist die Anzahl der Kanten hauptsächlich vier. Eine Ausnahme bildet die Spitze der V-Form, an der nur zwei Kantenübergänge vorliegen.

In dem erfindungsgemäßen Laufstreifen entsteht eine erste Kante an einem Übergang von der Lauffläche zu einer ersten Seitenwand eines Lamellenabschnitts der einen Lamellenseite. Eine zweite Kante entsteht an einem Übergang von einer zweiten Seitenwand des Lamellenabschnitts der einen Lamellenseite zu der Lauffläche. Eine dritte Kante entsteht an einem Übergang von der Lauffläche zu einer ersten Seitenwand eines Lamellenabschnitts der anderen Lamellenseite. Eine vierte Kante entsteht an einem Übergang von einer zweiten Seitenwand des Lamellenabschnitts der anderen Lamellenseite zu der Lauffläche. An der Spitze der V-Form liegen nur eine erste Kante an einem Übergang von der Lauffläche zu einer ersten Seitenwand eines Lamellenabschnitts der einen Lamellenseite und eine zweite Kante an einem Übergang von der Lauffläche zu einer zweiten Seitenwand eines Lamellenabschnitts der anderen Lamellenseite vor, wobei aufgrund der Achsensymmetrie der Lamelle die beiden Kanten spiegelsymmetrisch zueinander liegen. D.h. ebenfalls, dass zwischen beiden Kanten in der Spitze der V-Form die Spiegelachse verläuft.

In dem bestimmungsgemäßen Gebrauch des Laufstreifens mit dem Fahrzeugreifen liegt ein Kontakt zwischen einer Anzahl an Profilblöcken und einer Straßenoberfläche vor. Bei einem rotierenden Fahrzeugreifen ändern sich die Profilblöcke, die mit der Straßenoberfläche in Kontakt sind. D.h., die einzelnen Profilblöcke nehmen Kontakt mit der Straßenoberfläche auf und lösen den Kontakt mit der Straßenoberfläche, wobei die Aufnahme des Kontaktes mit der Straßenoberfläche und das Lösen des Kontaktes mit der Straßenoberfläche gleichzeitig nur entlang der axialen Richtung des Fahrzeugreifens erfolgt. Somit liegt stetig eine Aufnahme eines Kontaktes und ein Lösen eines Kontaktes vor.

Liegt eine Kante bei der Aufnahme des Kontaktes bzw. bei dem Lösen des Kontaktes vor, so verursacht die Kante eine Geräuschentwicklung. Kanten können in einem Design des Fahrzeugreifens reduziert oder ganz weggelassen werden, beispielsweise bei sogenannten "Slicks" im Rennsport, jedoch treten hierbei andere zu vermeidende negative Effekte im normalen Straßenverkehr auf. Kanten einer Lamelle führen zu einer höheren Griffigkeit des Fahrzeugreifens, insbesondere bei Schneeverhältnissen, so dass die Anzahl der Lamellen und damit einhergehend die Anzahl der Kanten der Lamellen nicht reduziert werden kann.

In dem erfindungsgemäßen Laufstreifen ist die Anzahl der Kanten entlang der axialen Richtung minimiert, so dass nur eine minimale Geräuschentwicklung verursacht wird. Die minimale Anzahl an Kanten in axialer Richtung führt somit zu einem geringeren Laufgeräusch.

Die mit den Merkmalen des Hauptanspruchs erzielten Effekte werden durch bevorzugte Ausführungsformen und Ausgestaltungen unterstützt und weiter verstärkt.

Besonders vorteilhaft ist ein Laufstreifen mit den weiteren Merkmalen gemäß Anspruch 2.

Gemäß der vorteilhaften Ausführungsform des Laufstreifens weist der erste Winkel einen Wert zwischen 50° und 80° auf. D.h., der erste Lamellenabschnitt und die Spiegelachse schließen einen ersten Winkel zwischen 50° und 80° ein. Das bedeutet ebenfalls, dass der erste Lamellenabschnitt der einen Lamellenseite mit dem ersten Lamellenabschnitt der anderen Lamellenseite einen Winkel zwischen 100° und 160° einschließen.

Der vorteilhafte Laufstreifen mit dem Merkmal des ersten Winkels zwischen 50° und 80° weist im bestimmungsgemäßen Gebrauch mit einem Fahrzeugreifen eine weitere Reduzierung des Laufgeräusches auf.

Besonders vorteilhaft ist ein Laufstreifen mit den weiteren Merkmalen gemäß Anspruch 3.

Gemäß der vorteilhaften Ausführungsform des Laufstreifens schließen der zweite Lamellenabschnitt und die Spiegelachse einen zweiten Winkel kleiner 45° in Richtung des parallelen Versatzes ein.

Der vorteilhafte Laufstreifen mit dem Merkmal des zweiten Winkels kleiner 45° weist im bestimmungsgemäßen Gebrauch mit einem Fahrzeugreifen eine weitere Reduzierung des Laufgeräusches auf.

Besonders vorteilhaft ist ein Laufstreifen mit den weiteren Merkmalen gemäß Anspruch 4.

Gemäß der vorteilhaften Ausführungsform des Laufstreifens bilden der erste Lamellenabschnitt, der zweite Lamellenabschnitt und der dritte Lamellenabschnitt ein erstes Lamellenabschnittstrio. D.h., der zweite Lamellenabschnitt ist auf der einen Seite mit dem ersten Lamellenabschnitt und auf der anderen Seite mit dem dritten Lamellenabschnitt verbunden. Alle drei Lamellenabschnitte bilden zusammen einen großen zusammenhängenden Lamellenabschnitt.

Die jeweilige Lamellenseite der vorteilhaften Ausführungsform des Laufstreifens weist zudem mindestens ein zweites Lamellenabschnittstrio auf. D.h., die Lamellenseite weist mindestens einen zweiten großen zusammenhängenden Lamellenabschnitt auf, der sich an den ersten großen zusammenhängenden Lamellenabschnitt anschließt. Durch den zweiten großen zusammenhängenden Lamellenabschnitt bzw. durch das zweite Lamellenabschnittstrio weist die Lamelle einen weiteren zweiten Lamellenabschnitt auf.

Der zweite Lamellenabschnitt verbessert im bestimmungsgemäßen Gebrauch mit einem Fahrzeugreifen insbesondere die Griffigkeit in lateraler Richtung, wobei die laterale Richtung senkrecht zu der Längsrichtung des Laufstreifens bzw. im bestimmungsgemäßen Gebrauch des Laufstreifens mit dem Fahrzeugreifen senkrecht zu der Umlaufrichtung des Fahrzeugreifens verläuft. D.h., im bestimmungsgemäßen Gebrauch des Laufstreifens mit dem Fahrzeugreifen ist die laterale Richtung parallel der axialen Richtung, die durch die Drehachse des Fahrzeugreifens definiert ist.

Eine Erhöhung der Anzahl an zweiten Lamellenabschnitten erhöht somit weiter die Griffigkeit in lateraler Richtung. Die Erhöhung der Anzahl an zweiten Lamellenabschnitten geht einher mit der Erhöhung der Anzahl an Lamellenabschnittstrios, so dass im bestimmungsgemäßen Gebrauch mit einem Fahrzeugreifen eine größere Anzahl an Lamellenabschnittstrios die Griffigkeit in lateraler Richtung verbessert.

Der vorteilhafte Laufstreifen mit dem Merkmal der mindestens zwei Lamellenabschnittstrios weist im bestimmungsgemäßen Gebrauch mit einem Fahrzeugreifen neben dem geringeren Laufgeräusch den weiteren Vorteil einer Erhöhung der Griffigkeit in lateraler Richtung auf.

Besonders vorteilhaft ist ein Laufstreifen mit den weiteren Merkmalen gemäß Anspruch 5.

Gemäß der vorteilhaften Ausführungsform des Laufstreifens weisen der Profilblock eine Profilblockhöhe und die Lamelle eine Lamellentiefe auf, wobei die Lamellentiefe kleiner als die Hälfte der Profilblockhöhe ist. Eine geringe Lamellentiefe führt zu einer höheren Steifigkeit des die Lamelle aufweisenden Profilblocks. Eine höhere Steifigkeit des Profilblocks wiederum verursacht im bestimmungsgemäßen Gebrauch mit einem Fahrzeugreifen eine geringere Geräuschentwicklung.

Der vorteilhafte Laufstreifen mit dem Merkmal der Lamellentiefe, die kleiner als die Hälfte der Profilblockhöhe ist, weist im bestimmungsgemäßen Gebrauch mit einem Fahrzeugreifen eine weitere Reduzierung des Laufgeräusches auf.

Besonders vorteilhaft ist ein Laufstreifen mit den weiteren Merkmalen gemäß Anspruch 6.

Gemäß der vorteilhaften Ausführungsform des Laufstreifens teilt die Lamelle den Profilblock in zwei Sub-Profilblöcke. D.h., der Profilblock umfasst eine erste Profilblockkante und eine zweite Profilblockkante, wobei die erste Profilblockkante und die zweite Profilblockkante durch die Lamelle miteinander verbunden sind. D.h., das eine Ende der Lamelle mündet in die erste Profilblockkante, wohingegen das zweite Ende der Lamelle in die zweite Profilblockkante mündet.

Die Lamelle teilt den Profilblock in zwei Sub-Profilblöcke derart, dass die zwei Sub-Profilblöcke entlang der Lauffläche den gleichen Flächeninhalt aufweisen. D.h., die Lamelle ist derart angeordnet, dass ein erster Teil der ersten Profilblockkante, ein erster Teil der zweiten Profilblockkante, die Lamelle und beispielsweise eine dritte Profilblockkante einen ersten Sub-Profilblock bilden. Zudem ist die Lamelle derart angeordnet, dass ein zweiter Teil der ersten Profilblockkante, ein zweiter Teil der zweiten Profilblockkante, die Lamelle und beispielsweise eine vierte Profilblockkante einen zweiten Sub-Profilblock bilden.

Ein gleicher Flächeninhalt von Sub-Profilblöcken führt zu einer gleichen Steifigkeit der Sub-Profilblöcke. Eine vergleichbare Steifigkeit der Sub-Profilblöcke kann wiederum ein optimales Abtriebsverhalten sicherstellen und zu einer guten Laufstreifen-Integrity führen.

Der vorteilhafte Laufstreifen mit dem Merkmal der zwei Sub-Profilblöcke mit gleichen Flächeninhalten weist im bestimmungsgemäßen Gebrauch mit einem Fahrzeugreifen neben einer Reduzierung des Laufgeräusches den weiteren Vorteil einer Verbesserung des Abtriebsverhalten auf.

Besonders vorteilhaft ist ein Laufstreifen mit den weiteren Merkmalen gemäß Anspruch 7.

Gemäß der vorteilhaften Ausführungsform des Laufstreifens ist die Lamelle eine erste Lamelle. Der Profilblock weist mindestens eine zweite Lamelle auf. D.h., im bestimmungsgemäßen Gebrauch des Laufstreifens mit einem Fahrzeugreifen weist die zweite Lamelle eine radial außenliegende Öffnung auf, die sich beim Fahren je nach Fahrsituation schließen und wieder öffnen kann. Die zweite Lamelle weist zusätzlich Kanten auf, die im bestimmungsgemäßen Gebrauch mit einem Fahrzeugreifen zu einer höheren Griffigkeit des Fahrzeugreifens führt.

Die zweite Lamelle kann parallel zu der ersten Lamelle verlaufen. Die zweite Lamelle kann zudem eine erste Profilblockkante und eine zweite Profilblockkante verbinden.

Der vorteilhafte Laufstreifen mit dem Merkmal der zweiten Lamelle weist im bestimmungsgemäßen Gebrauch mit einem Fahrzeugreifen neben dem geringeren Laufgeräusch den weiteren Vorteil einer Erhöhung der Griffigkeit auf.

Besonders vorteilhaft ist ein Laufstreifen mit den weiteren Merkmalen gemäß Anspruch 8.

Gemäß der vorteilhaften Ausführungsform des Laufstreifens ist der Profilblock ein erster Profilblock. Der Laufstreifen umfasst in Längsrichtung des Laufstreifens mindestens einen zweiten Profilblock, wobei der erste Profilblock eine Anzahl an Lamellen aufweist, die sich von einer Anzahl an Lamellen des zweiten Profilblocks unterscheidet. D.h., im bestimmungsgemäßen Gebrauch des Laufstreifens mit einem Fahrzeugreifen liegen der erste Profilblock und der zweite Profilblock entlang einer Umlaufrichtung hintereinander. Der erste Profilblock kann beispielsweise eine einzelne Lamelle aufweisen, wohingegen der zweite Profilblock zwei Lamellen oder mehr aufweisen kann.

Eine größere Anzahl an Lamellen erhöht im bestimmungsgemäßen Gebrauch des Laufstreifens mit einem Fahrzeugreifen die Griffigkeit des Fahrzeugreifens. Gleichzeitig verursacht eine größere Anzahl an Lamellen im bestimmungsgemäßen Gebrauch des Laufstreifens mit einem Fahrzeugreifen eine höhere Geräuschentwicklung. Durch eine Ausbildung der Profilblöcke mit einer unterschiedlichen Anzahl an Lamellen kann beispielsweise die Griffigkeit des Fahrzeugreifens in Abhängigkeit der durch die größere Anzahl an Lamellen zunehmenden Geräuschentwicklung optimiert werden.

Der vorteilhafte Laufstreifen mit dem Merkmal des zweiten Profilblocks, der gegenüber dem ersten Profilblock eine unterschiedliche Anzahl an Lamellen umfasst, weist im bestimmungsgemäßen Gebrauch mit einem Fahrzeugreifen neben dem geringeren Laufgeräusch den weiteren Vorteil eines Ausgleichs zwischen der höheren Griffigkeit des Fahrzeugreifens und des zumutbaren Geräuschpegels auf.

Besonders vorteilhaft ist ein Laufstreifen mit den weiteren Merkmalen gemäß Anspruch 9.

Gemäß der vorteilhaften Ausführungsform des Laufstreifens ist der Profilblock ein erster Profilblock. Der Laufstreifen umfasst in Längsrichtung des Laufstreifens mindestens einen zweiten Profilblock, wobei die Lamelle des ersten Profilblocks eine Anzahl an Lamellenabschnittstrios aufweist, die sich von einer Anzahl an Lamellenabschnittstrios der Lamelle des zweiten Profilblocks unterscheidet. D.h., im bestimmungsgemäßen Gebrauch des Laufstreifens mit einem Fahrzeugreifen liegen der erste Profilblock und der zweite Profilblock entlang einer Umlaufrichtung hintereinander. Der erste Profilblock kann beispielsweise eine Lamelle aufweisen, deren eine Lamellenseite ein einzelnes Lamellenabschnittstrio aufweist, wohingegen eine Lamelle des zweiten Profilblocks eine Lamellenseite mit zwei Lamellenabschnittstrios aufweisen kann.

Aufgrund eines zweiten Lamellenabschnitts in einem Lamellenabschnittstrio erhöht eine größere Anzahl an Lamellenabschnittstrios im bestimmungsgemäßen Gebrauch des Laufstreifens mit einem Fahrzeugreifen die Griffigkeit des Fahrzeugreifens in lateraler bzw. in axialer Richtung. Gleichzeitig verursacht eine größere Anzahl an Lamellenabschnittstrios im bestimmungsgemäßen Gebrauch des Laufstreifens mit einem Fahrzeugreifen eine höhere Geräuschentwicklung. Durch eine Ausbildung der Profilblöcke mit einer unterschiedlichen Anzahl an Lamellenabschnittstrios kann beispielsweise die laterale bzw. axiale Griffigkeit des Fahrzeugreifens in Abhängigkeit der durch die größere Anzahl an Lamellenabschnittstrios zunehmenden Geräuschentwicklung optimiert werden.

Der vorteilhafte Laufstreifen mit dem Merkmal des zweiten Profilblocks, der gegenüber dem ersten Profilblock eine unterschiedliche Anzahl an Lamellenabschnittstrios umfasst, weist im bestimmungsgemäßen Gebrauch mit einem Fahrzeugreifen neben dem geringeren Laufgeräusch den weiteren Vorteil eines Ausgleichs zwischen der höheren Griffigkeit des Fahrzeugreifens und des zumutbaren Geräuschpegels auf.

Erfindungsgemäß ist ein Fahrzeugreifen mit den Merkmalen gemäß nebengeordnetem Anspruch 10 offenbart. Der erfindungsgemäße Fahrzeugreifen umfasst hierbei einen erfindungsgemäßen Laufstreifen.

Der erfindungsgemäße Fahrzeugreifen weist eine Verbesserung des Laufgeräusches auf.

Die Erfindung wird nachfolgend unter Bezugnahme auf die beigefügten Zeichnungen anhand vorteilhafter Ausführungsformen beispielhaft beschrieben.

Die Figur 1 zeigt eine erste vorteilhafte Ausführungsform eines Laufstreifens mit einem eine Lamelle aufweisenden Profilblock.

Die Figur 2 zeigt eine weitere vorteilhafte Ausführungsform eines Laufstreifens mit einem eine Lamelle aufweisenden Profilblock, wobei eine Lamellenseite der Lamelle ein zweites Lamellenabschnittstrio aufweist.

Die Figur 3 zeigt eine weitere vorteilhafte Ausführungsform eines Laufstreifens mit einem Profilblock, wobei der Profilblock zwei Lamellen aufweist.

Die Figur 4 zeigt eine weitere vorteilhafte Ausführungsform eines Laufstreifens mit einem ersten Profilblock und einem zweiten Profilblock, wobei die jeweilige Anzahl der Lamellen unterschiedlich ist.

Die Figur 5 zeigt eine weitere vorteilhafte Ausführungsform eines Laufstreifens mit einem ersten Profilblock und einem zweiten Profilblock, wobei die jeweilige Anzahl der Lamellenabschnittstrios unterschiedlich ist.

Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

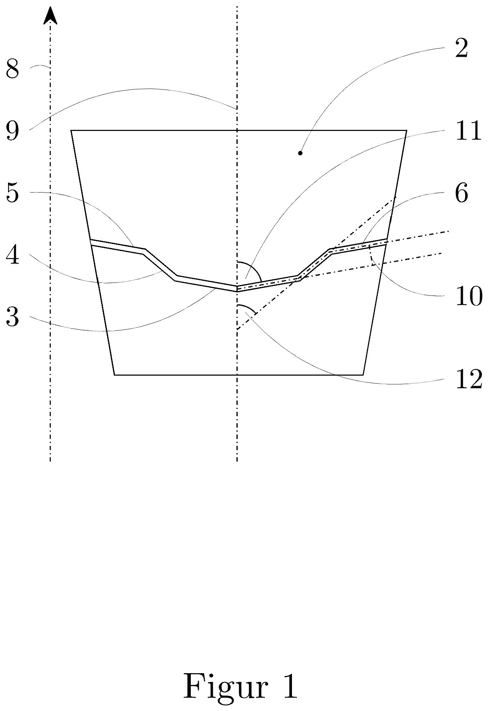

Die Figuren 1 bis 5 zeigen vorteilhafte Ausführungsformen eines Laufstreifens mit einer Lauffläche 1. Die Lauffläche 1 weist ein Reifenprofil auf, welches mindestens einen Profilblock 2 umfasst. Die beispielhaften Profilblöcke 2 in den Figuren 1 bis 5 weisen jeweils eine erste Profilblockkante, eine zweite Profilblockkante, eine dritte Profilblockkante und eine vierte Profilblockkante auf.

Der Profilblock 2 umfasst eine Lamelle 6. Das eine Ende der Lamelle 6 mündet in die erste Profilblockkante und das andere Ende der Lamelle 6 mündet in die zweite Profilblockkante. D.h., die Lamelle 6 verbindet die erste Profilblockkante mit der zweiten Profilblockkante. Die Lamelle 6 trennt den Profilblock 2 in einen ersten Sub-Profilblock und in einen zweiten Sub-Profilblock, wobei der Flächeninhalt des ersten Sub-Profilblocks gegenüber dem zweiten Sub-Profilblock unterschiedlich ist.

Der Profilblock 2 ist achsensymmetrisch zu einer Spiegelachse 9 ausgebildet. D.h., die erste Profilblockkante ist spiegelsymmetrisch zu der zweiten Profilblockkante ausgebildet. Die Spiegelachse 9 ist parallel zu einer Längsrichtung 8 des Laufstreifens angeordnet.

Die Lamelle 6 weist ebenfalls eine Achsensymmetrie zu der Spiegelachse 9 auf. Aus der Achsensymmetrie ergeben sich zwei Lamellenseiten, wobei die eine Lamellenseite in die erste Profilblockkante mündet und die andere Lamellenseite in die zweite Profilblockkante mündet. Die jeweilige Lamellenseite umfasst einen ersten Lamellenabschnitt 3, einen zweiten Lamellenabschnitt 4 und einen dritten Lamellenabschnitt 5.

Der erste Lamellenabschnitt 3 schließt mit der Spiegelachse 9 einen ersten Winkel 11 ein. In den Figuren 1 bis 5 beträgt der erste Winkel 80°. Aufgrund der Achsensymmetrie hinsichtlich der Spiegelachse 9 ist der erste Lamellenabschnitt 3 der einen Lamellenseite spiegelsymmetrisch zu dem ersten Lamellenabschnitt 3 der anderen Lamellenseite angeordnet. Der erste Lamellenabschnitt 3 der einen Lamellenseite schließt mit dem ersten Lamellenabschnitt 3 der anderen Lamellenseite somit einen Winkel von 160° ein, da der Winkel zwischen den beiden ersten Lamellenabschnitten 3 das Zweifache des ersten Winkels beträgt.

Der dritte Lamellenabschnitt 5 ist zu dem ersten Lamellenabschnitt 3 parallel angeordnet. Zudem weist der dritte Lamellenabschnitt 5 und der erste Lamellenabschnitt 3 einen Versatz 10 auf, wobei der Versatz 10 in Richtung des ersten Winkels 11 angeordnet ist. D.h., der von dem ersten Lamellenabschnitt 3 und der Spiegelachse 9 eingeschlossene erste Winkel 11 definiert durch seinen Einschluss eine Richtung entlang der Spiegelachse 9. Der Versatz 10 ist in die Richtung des ersten Winkels 11 angeordnet bzw. der dritte Lamellenabschnitt 5 ist gegenüber dem ersten Lamellenabschnitt 3 in Richtung des ersten Winkels 11 parallel versetzt angeordnet. Aufgrund der Parallelität des dritten Lamellenabschnitts 5 gegenüber dem ersten Lamellenabschnitt 3 ist der dritte Lamellenabschnitt 5 gegenüber der Spiegelachse 9 ebenfalls um den ersten Winkel 11 gekippt. Zudem ist der dritte Lamellenabschnitt 5 der einen Lamellenseite gegenüber dem dritten Lamellenabschnitt 5 der anderen Lamellenseite um 160° gekippt, dem zweifachen Wert des ersten Winkels 11.

Der zweite Lamellenabschnitt 4 liegt zwischen dem ersten Lamellenabschnitt 3 und dem dritten Lamellenabschnitt 5. Ein erstes Ende des zweiten Lamellenabschnitts 4 ist mit dem ersten Lamellenabschnitt 3 verbunden und ein zweites Ende des zweiten Lamellenabschnitts 4 ist mit dem dritten Lamellenabschnitt 5 verbunden, so dass der zweite Lamellenabschnitt 4 den ersten Lamellenabschnitt 3 mit dem dritten Lamellenabschnitt 5 verbindet. Der zweite Lamellenabschnitt 4 schließt mit der Spiegelachse 9 einen zweiten Winkel 12 ein. Der zweite Winkel 12 liegt immer zwischen 0° und dem Wert des ersten Winkels 11, wobei der Wert des ersten Winkels 11 in dem Winkelbereich nicht eingeschlossen ist, da bei einer Angleichung des zweiten Winkels 12 an den ersten Winkel 11 kein Versatz 10 vorliegt. In den Figuren 1 bis 5 schließt der zweite Lamellenabschnitt 4 mit der Spiegelachse 9 den zweiten Winkel 12 von 50° ein, wobei der zweite Winkel 12 somit in dem Winkelbereich zwischen 0° und den 80° des ersten Winkels 11 liegt. Zudem ist der zweite Lamellenabschnitt 4 der einen Lamellenseite gegenüber dem zweiten Lamellenabschnitt 4 der anderen Lamellenseite um 100° gekippt, dem zweifachen Wert des zweiten Winkels 12.

Der erste Lamellenabschnitt 3, der zweite Lamellenabschnitt 4 und der dritte Lamellenabschnitt 5 bilden zusammen ein Lamellenabschnittstrio.

In der Ausführungsform des vorteilhaften Laufstreifens der Figur 1 münden der dritte Lamellenabschnitt 5 der einen Lamellenseite in die erste Profilblockkante und der dritte Lamellenabschnitt 5 der anderen Lamellenseite in die zweite Profilblockkante. Die Lamelle 6 in der Figur 1 umfasst demnach nur zwei Lamellenabschnittstrios bzw. sechs Lamellenabschnitte.

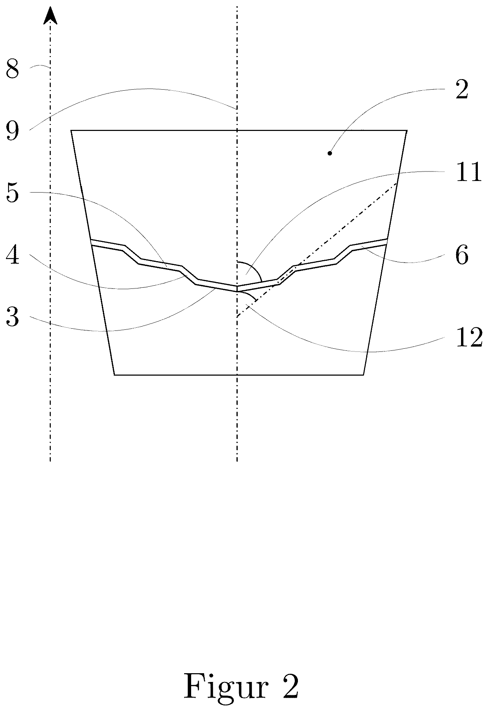

In der Ausführungsform des vorteilhaften Laufstreifens der Figur 2 weist die Lamelle auf jeder Lamellenseite zwei Lamellenabschnittstrios auf, wobei der dritte Lamellenabschnitt 5 des ersten Lamellenabschnittstrios in den ersten Lamellenabschnitt 3 des zweiten Lamellenabschnittstrios übergeht. D.h., der dritte Lamellenabschnitt 5 des ersten Lamellenabschnittstrios und der erste Lamellenabschnitt 3 des zweiten Lamellenabschnittstrios schließen einen Winkel von 180° ein. Insgesamt umfasst die Lamelle 6 vier Lamellenabschnittstrios.

Der erste Lamellenabschnitt 3 des ersten Lamellenabschnittstrios und der erste Lamellenabschnitt 3 des zweiten Lamellenabschnittstrios sind parallel zueinander angeordnet. Der dritte Lamellenabschnitt 5 des ersten Lamellenabschnittstrios und der dritte Lamellenabschnitt 5 des zweiten Lamellenabschnittstrios sind somit ebenfalls parallel zueinander angeordnet. Das gleiche gilt für den zweiten Lamellenabschnitt 4, der zweite Lamellenabschnitt 4 des ersten Lamellenabschnittstrios und der zweite Lamellenabschnitt 4 des zweiten Lamellenabschnittstrios sind parallel zueinander angeordnet.

Aufgrund der Achsensymmetrie hinsichtlich der Spiegelachse 9 sind die ersten Lamellenabschnitte 3 der einen Lamellenseite spiegelsymmetrisch zu den ersten Lamellenabschnitten 3 der anderen Lamellenseite angeordnet. Die dritten Lamellenabschnitte 5 der einen Lamellenseite sind somit ebenfalls spiegelsymmetrisch zu den dritten Lamellenabschnitten 5 der anderen Lamellenseite angeordnet. Das gleiche gilt für den zweiten Lamellenabschnitt 4, die zweiten Lamellenabschnitte 4 der einen Lamellenseite sind spiegelsymmetrisch zu den zweiten Lamellenabschnitten 4 der anderen Lamellenseite angeordnet.

In der Figur 2 münden der dritte Lamellenabschnitt 5 des zweiten Lamellenabschnittstrios der einen Lamellenseite in die erste Profilblockkante und der dritte Lamellenabschnitt 5 des zweiten Lamellenabschnittstrios der anderen Lamellenseite in die zweite Profilblockkante.

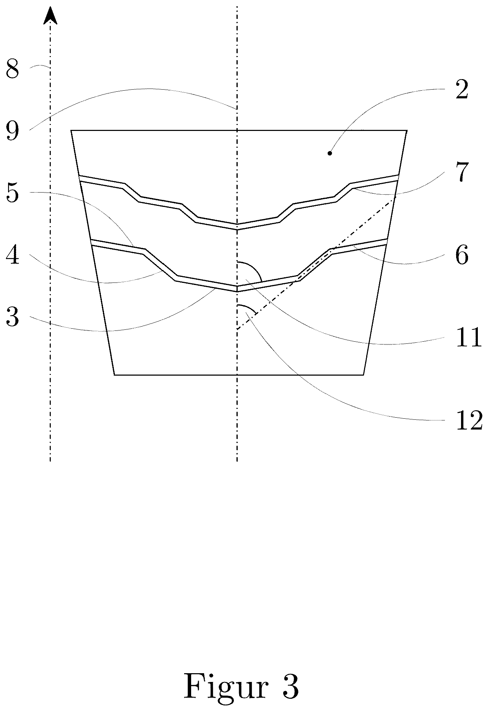

In der Ausführungsform des vorteilhaften Laufstreifens der Figur 3 weist der Profilblock 2 eine erste Lamelle 6 und eine zweite Lamelle 7 auf. Die erste Lamelle 6 ist der Lamelle 6 der Figur 1 gleich ausgebildet, wohingegen die zweite Lamelle 7 der Lamelle 6 der Figur 2 gleich ausgebildet ist. D.h., in der Figur 3 münden der dritte Lamellenabschnitt 5 der einen Lamellenseite der ersten Lamelle 6 in die erste Profilblockkante und der dritte Lamellenabschnitt 5 der anderen Lamellenseite der ersten Lamelle 6 in die zweite Profilblockkante. Zudem münden der dritte Lamellenabschnitt 5 des zweiten Lamellenabschnittstrios der einen Lamellenseite der zweiten Lamelle 7 in die erste Profilblockkante und der dritte Lamellenabschnitt 5 des zweiten Lamellenabschnittstrios der anderen Lamellenseite der zweiten Lamelle 7 in die zweite Profilblockkante.

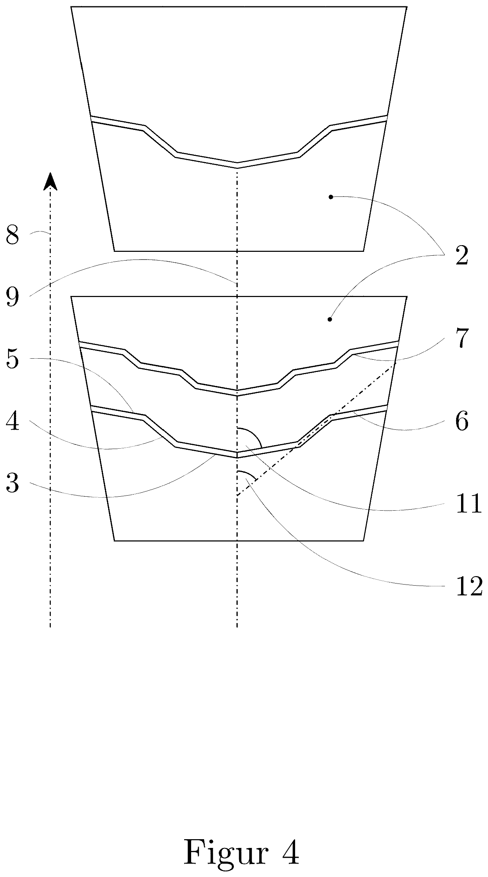

In der Ausführungsform des vorteilhaften Laufstreifens der Figur 4 umfasst der Laufstreifen einen ersten Profilblock 2 und einen zweiten Profilblock 2. Der erste Profilblock 2 ist dem Profilblock 2 der Figur 3 gleich ausgebildet. Der zweite Profilblock ist dem Profilblock 2 der Figur 1 gleich ausgebildet. Der erste Profilblock 2 und der zweite Profilblock 2 sind in Längsrichtung 8 des Laufstreifens derart angeordnet, dass die Spiegelachse 9 des ersten Profilblocks 2 und die Spiegelachse 9 des zweiten Profilblocks 2 eine einheitliche gemeinsame Achse bilden.

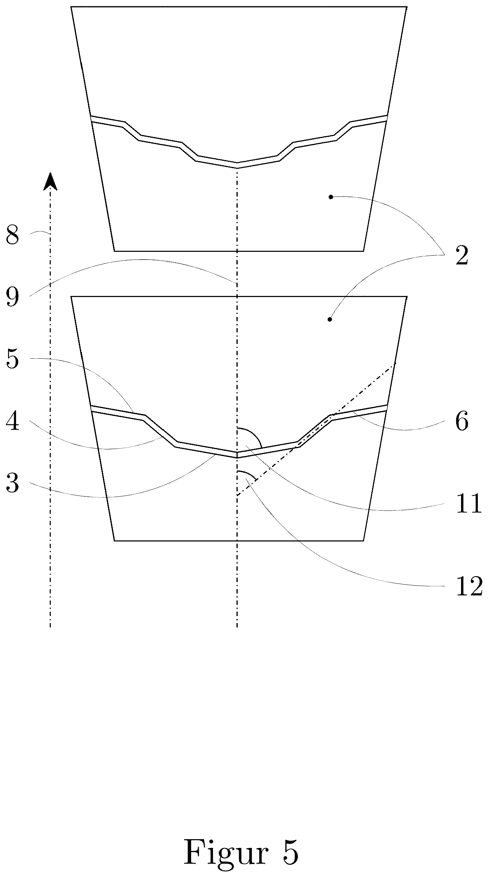

In der Ausführungsform des vorteilhaften Laufstreifens der Figur 5 umfasst der Laufstreifen ebenfalls einen ersten Profilblock 2 und einen zweiten Profilblock 2. Der erste Profilblock 2 ist dem Profilblock 2 der Figur 1 gleich ausgebildet. Der zweite Profilblock ist dem Profilblock 2 der Figur 2 gleich ausgebildet. Der erste Profilblock 2 und der zweite Profilblock 2 sind in Längsrichtung 8 des Laufstreifens derart angeordnet, dass die Spiegelachse 9 des ersten Profilblocks 2 und die Spiegelachse 9 des zweiten Profilblocks 2 eine einheitliche gemeinsame Achse bilden.

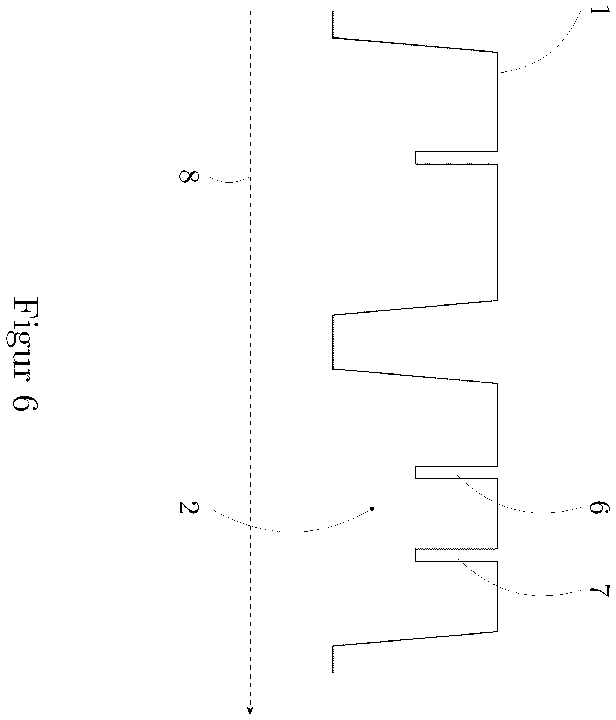

In der Figur 6 ist ein weiterer vorteilhafter Laufstreifen dargestellt. Im Gegensatz zu den Figuren 1 bis 5 ist in der Figur 6 der vorteilhafte Laufstreifen in einem Längsschnitt gezeigt, wobei der Längsschnitt entlang einer Längsrichtung 8 des Laufstreifens verläuft. Der vorteilhafte Laufstreifen umfasst eine Lauffläche 1, die ein Reifenprofil aufweist. In der Figur 6 weist das Reifenprofil mindestens zwei Profilblöcke 2 auf.

Ein erster Profilblock 2 umfasst eine dritte Profilblockkante und eine vierte Profilblockkante. Ferner umfasst der erste Profilblock 2 eine erste Lamelle 6 und eine zweite Lamelle 7. Die erste Lamelle 6 erstreckt sich von der Lauffläche 1 in den Profilblock 2 hinein zu einem Lamellengrund der ersten Lamelle 6, wohingegen die zweite Lamelle 7 sich von der Lauffläche 1 in den Profilblock 2 hinein zu einem Lamellengrund der zweiten Lamelle 7 erstreckt. Eine Lamellentiefe der ersten Lamelle 6 als auch eine Lamellentiefe der zweiten Lamelle 7 sind kleiner als eine Profilblockhöhe des Profilblocks 2. In der Figur 6 sind die Lamellentiefe der ersten Lamelle 6 als auch die Lamellentiefe der zweiten Lamelle 7 kleiner als die Hälfte der Profilblockhöhe des Profilblocks 2.

### Bezugszeichenliste

1 - Lauffläche
2 - Profilblock
3 - erster Lamellenabschnitt
4 - zweiter Lamellenabschnitt
5 - dritter Lamellenabschnitt
6 - Lamelle / erste Lamelle
7 - zweite Lamelle
8 - Längsrichtung
9 - Spiegelachse
10 - Versatz
11 - erster Winkel
12 - zweiter Winkel

## Patentansprüche

1. Laufstreifen für einen Fahrzeugreifen, umfassend mindestens einen Profilblock (2), der eine achsensymmetrische Lamelle (6) aufweist, wobei eine der Achsensymmetrie zugrunde liegende Spiegelachse (9) parallel zu einer Längsrichtung (8) des Laufstreifens ausgerichtet ist,
wobei eine sich durch die Spiegelachse (9) ergebene Lamellenseite der Lamelle einen ersten Lamellenabschnitt (3), einen zweiten Lamellenabschnitt (4) und einen dritten Lamellenabschnitt (5) umfasst,
wobei der erste Lamellenabschnitt (3) und der dritte Lamellenabschnitt (5) einen parallelen Versatz (10) aufweisen und den zweiten Lamellenabschnitt (4) einschließen, wobei der erste Lamellenabschnitt (3) und die Spiegelachse (9) einen ersten Winkel (11) kleiner 90° einschließen,
**dadurch gekennzeichnet, dass**
der erste Winkel (11) in Richtung des parallelen Versatzes (10) eingeschlossen ist.

2. Laufstreifen nach Anspruch 1, **dadurch gekennzeichnet,**
**dass** der erste Winkel (11) einen Wert zwischen 50° und 80° aufweist.

3. Laufstreifen nach einem der vorhergehenden Ansprüche, **dadurch gekennz eichnet**,
dass der zweite Lamellenabschnitt (4) und die Spiegelachse (9) einen zweiten Winkel (12) kleiner 45° in Richtung des parallelen Versatzes (10) einschließen.

4. Laufstreifen nach einem der vorhergehenden Ansprüche, **dadurch gekennz eichnet**,
dass der erste Lamellenabschnitt (3), der zweite Lamellenabschnitt (4) und der dritte Lamellenabschnitt (5) ein erstes Lamellenabschnittstrio bilden und die Lamellenseite mindestens ein zweites Lamellenabschnittstrio umfasst.

5. Laufstreifen nach einem der vorhergehenden Ansprüche, **dadurch gekennz eichnet**,
dass der Profilblock (2) eine Profilblockhöhe aufweist und die Lamelle (6) eine Lamellentiefe aufweist, wobei die Lamellentiefe kleiner als die Hälfte der Profilblockhöhe ist.

6. Laufstreifen nach einem der vorhergehenden Ansprüche, **dadurch gekennz eichnet**,
dass die Lamelle (6) den Profilblock (2) in zwei Sub-Profilblöcke teilt, so dass die zwei Sub-Profilblöcke entlang der Lauffläche (1) den gleichen Flächeninhalt aufweisen.

7. Laufstreifen nach einem der vorhergehenden Ansprüche, **dadurch gekennz eichnet**,
dass die Lamelle (6) eine erste Lamelle ist und der Profilblock (2) mindestens eine zweite Lamelle (7) aufweist.

8. Laufstreifen nach einem der vorhergehenden Ansprüche, **dadurch gekennz eichnet**,
dass der Profilblock (2) ein erster Profilblock ist und der Laufstreifen in Längsrichtung (8) des Laufstreifens mindestens einen zweiten Profilblock aufweist, wobei der erste Profilblock (2) eine Anzahl an Lamellen (6, 7) aufweist, die sich von einer Anzahl an Lamellen des zweiten Profilblocks unterscheidet.

9. Laufstreifen nach einem der Ansprüche 4 bis 8, **dadurch gekennzeichne t**,
dass der Profilblock (2) ein erster Profilblock ist und der Laufstreifen in Längsrichtung (8) des Laufstreifens mindestens einen zweiten Profilblock aufweist, wobei die Lamelle des ersten Profilblocks (2) eine Anzahl an Lamellenabschnittstrios aufweist, die sich von einer Anzahl an Lamellenabschnittstrios der Lamelle des zweiten Profilblocks unterscheidet.

10. Fahrzeugreifen, umfassend einen Laufstreifen nach einem der Ansprüche 1 bis 9.
